# EUROPEAN PATENT APPLICATION

(11) **EP 2 977 294 A1**
(43) Date of publication of application: **27.01.2016**
(21) Application number: 14770757.4
(22) Date of filing: 19.03.2014
(51) Int. Cl.: B62B 3/10, B62B 3/00

(54) **TIRE HOLDING DEVICE**

(30) Priority: 22.03.2013 JP 2013060598
(71) Applicant: Kayaba System Machinery Co., Ltd., Tokyo 105-0012 (JP)
(72) Inventor: TABATA, Yasuhiko, Tokyo 105-0012 (JP)
(74) Representative: Grünecker Patent- und Rechtsanwälte PartG mbB
(86) International application number: PCT/JP2014/057469
(87) International publication number: WO 2014/148528

(57) **Abstract**

Disclosed is a tire holder apparatus (A) having a frame and a pair of support rollers installed in the frame to load a tire, wherein the frame is disassemblable into upper and lower frames, the pair of support rollers is installed in the lower frame, the frame has a connecting member that detachably connects the upper and lower frames to each other, and the lower frame is loaded on a cart.

## Description

### TECHNICAL FIELD

This invention relates to improvement of a tire holder apparatus.

### BACKGROUND ART

In general, when an aircraft tire is replaced, a tire replacement truck is used due to its large size. In addition, a crane is mounted on a cargo deck of the tire replacement truck, and a tire holder apparatus for holding a tire is hung from the crane to allow the tire to be loaded, unloaded, carried, or replaced (for example, refer to JP 2003-019918 A).

The tire holder apparatus has a frame, a pair of support rollers, and a support bar. The pair of support rollers is installed in the frame to support the tire from the bottom. The support bar is installed in the frame to support the upper part of the tire.

The frame is also installed with a hanger member, and the tire holder apparatus can be hung from a crane by hoisting the hanger member using the crane.

### SUMMARY OF INVENTION

However, depending on a shape or configuration of the aircraft frame, for a certain type of the aircraft frame, it is difficult to drive the tire holder apparatus that holds a tire to the vicinity of the aircraft frame while being hung from the crane.

In view of the aforementioned problems, it is therefore an object of this invention to provide a tire holder apparatus applicable to more types of aircraft frames.

There is provided a tire holder apparatus comprising a frame, and a pair of support rollers installed in the frame to load a tire, wherein the frame is disassemblable into upper and lower frames, the pair of support rollers is installed in the lower frame, the frame has a connecting member that detachably connects the upper and lower frames to each other, and the lower frame is loaded on a cart.

### BRIEF DESCRIPTION OF DRAWINGS

FIG. 1 is a front view illustrating a tire holder apparatus according to a first embodiment of this invention;
FIG. 2 is a right side view illustrating the tire holder apparatus according to the first embodiment of this invention;
FIG. 3 is an enlarged vertical cross-sectional view illustrating a rotary unit of the tire holder apparatus according to the first embodiment of this invention;
FIG. 4A is a top end view illustrating a hanger member of the tire holder apparatus as seen from a Y-direction of FIG. 4B;
FIG. 4B is a partially exploded right side view illustrating the hanger member of the tire holder apparatus according to the first embodiment of this invention;
FIG. 5 is an enlarged vertical cross-sectional view illustrating a left connecting member of the tire holder apparatus according to the first embodiment of this invention, in which upper and lower frames are disconnected;
FIG. 6 is an enlarged vertical cross-sectional view illustrating a left connecting member of the tire holder apparatus according to the first embodiment of this invention, in which the upper and lower frames are connected;
FIG. 7 is an enlarged front view illustrating the left connecting member of the tire holder apparatus according to a modification of the first embodiment of this invention, in which the upper and lower frames are disconnected;
FIG. 8 is an enlarged front view illustrating the left connecting member of the tire holder apparatus according to a modification of the first embodiment of this invention, in which the upper and lower frames are connected;
FIG. 9 is an enlarged vertical cross-sectional view illustrating a connecting member of the tire holder apparatus according to a second embodiment of this invention, in which upper and lower frames are disconnected;
FIG. 10 is an enlarged vertical cross-sectional view illustrating the connecting member of the tire holder apparatus according to the second embodiment of this invention, in which the upper and lower frames are connected;
FIG. 11 is a right side view illustrating a tire holder apparatus as a comparative example; and
FIG. 12 is a diagram illustrating how to use the tire holder apparatus as a comparative example.

### DESCRIPTION OF EMBODIMENTS

A description will now be made for a tire holder apparatus according to a first embodiment of this invention with reference to the accompanying drawings, in which like reference numerals denote like elements throughout several drawings.

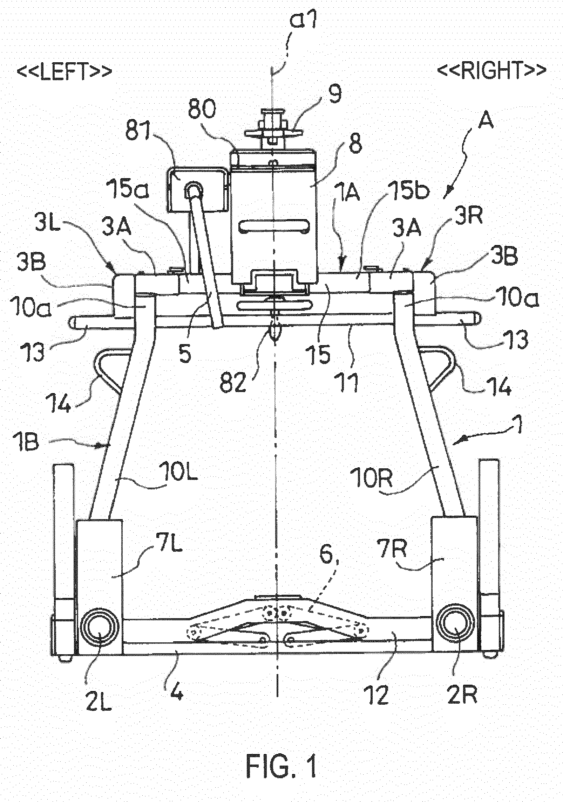

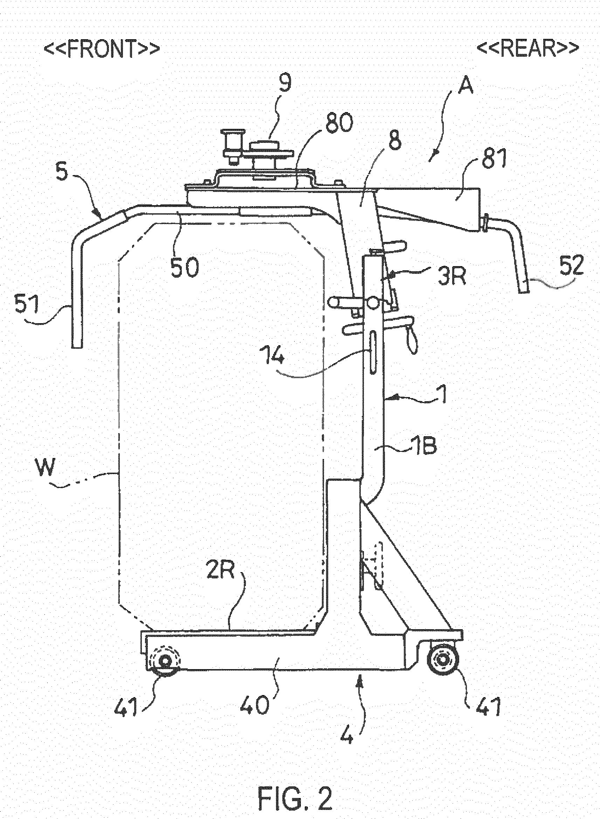

Referring to FIG. 1, the tire holder apparatus A according to the first embodiment comprises a frame 1 and a pair of support rollers 2L and 2R. The pair of support rollers 2L and 2R is installed in the frame 1 to load a tire W (FIG. 2).

The frame 1 is disassemblable into upper and lower frames 1A and 1B and is provided with connecting members 3L and 3R (first and second connecting members 3L and 3R). The pair of support rollers 2L and 2R is installed in the lower frame 1B. The connecting members 3L and 3R are used to connect the upper and lower frames 1A and 1B to each other in a detachable manner. In addition, the lower frame 1B of the tire holder apparatus A is loaded on a cart 4.

The tire holder apparatus A according to the first embodiment is used to hold a large-sized tire W such as an aircraft tire as illustrated in FIGS. 1 and 2 to perform a transport or replacement work of the tire W.

Since the tire holder apparatus A has the frame 1 and the pair of support rollers 2L and 2R installed in the frame 1, it is possible to load a tire W on both the support rollers 2L and 2R. In addition, the tire holder apparatus A has a support bar 5 installed in the frame 1 along with the support rollers 2L and 2R to support an upper part of the tire W and prevent the tire W from being removed from the support rollers 2L and 2R.

Hereinafter, as seen from the tire loaded on the support rollers 2L and 2R, the left side will be referred to as a "left side" of the tire holder apparatus A, the right side will be referred to as a "right side" of the tire holder apparatus A, the tire side will be referred to as a "front side" of the tire holder apparatus A, and the side opposite to the tire side will be referred to as a "rear side" of the tire holder apparatus A.

According to the first embodiment, the tire holder apparatus A comprises a cart 4, a jack 6, rotary units 7L and 7R, a height adjustment unit 8, an upper plate 80, a holding member 81, and a hanger member 9. The lower frame 1B corresponding to a lower part of the frame 1 disassemblable into upper and lower frames is loaded on the cart 4. The jack 6 is interposed between the cart 4 and the lower frame 1B to lift or lower the lower frame 1B. The rotary units 7L and 7R rotate the support rollers 2L and 2R, respectively. The height adjustment unit 8 is installed in the upper frame 1A corresponding to an upper part of the frame 1 disassemblable into upper and lower frames to adjust a height of the support bar 5. The upper plate 80 is fixed to the upper end of the height adjustment unit 8. The holding member 81 is fixed to the upper lateral surface of the height adjustment unit 8 to hold the support bar 5. The hanger member 9 is fixed to the upper surface of the upper plate 80.

The support rollers 2L and 2R where the tire W is loaded are arranged approximately in parallel to each other on the left and right sides. Each support roller 2L and 2R is formed in a cylindrical shape and extends approximately horizontally to the front side of the frame 1. The tire W is loaded on the support rollers 2L and 2R while its one lateral surface faces the frame 1 in an upright state. Each support roller 2L and 2R abuts on the lower side of the outer circumferential surface of the tire W along an axial direction to support the tire W from the bottom.

The support bar 5 that supports the upper part of the tire W has a bar-like slide portion 50, a support portion 51, and a handling portion 52 as illustrated in FIG. 2. The support portion 51 extends downwards from one edge of the slide portion 50. The handling portion 52 extends downwards from the other edge of the slide portion 50. The support portion 51 is arranged in the front side, and the handling portion 52 is arranged in the rear side. In addition, the frame 1 prevents the tire W loaded on the pair of support rollers 2L and 2R from collapsing to the rear side. For this reason, by arranging the support portion 51 of the support bar 5 in the front side of the tire W, it is possible to prevent the tire W from collapsing to the front side and being removed from the support rollers 2L and 2R.

As described above, the frame 1 has the upper frame 1A, the lower frame 1B where the pair of support rollers 2L and 2R is mounted, and the connecting members 3L and 3R that connect the upper and lower frames 1A and 1B to each other in a detachable manner. The support bar 5 is installed in the upper frame 1A.

As illustrated in FIG. 1, the lower frame 1B has strut members 10L and 10R, an upper bridge member 11, a lower bridge member 12, handles 13 and 13, and hanger portions 14 and 14. The strut members 10L and 10R are erected from the rear ends of the left and right support rollers 2L and 2R, respectively. The upper bridge member 11 links the upper parts of the strut members 10L and 10R. The lower bridge member 12 links the lower parts of the strut members 10L and 10R. The handles 13 and 13 extend horizontally outwards from the strut members 10L and 10R, respectively. The hanger portions 14 and 14 protrude outwards from the strut members 10L and 10R, respectively.

The left and right strut members 10L and 10R are arranged in a plane-symmetrical geometry (reflection symmetry) with respect to a center plane a1 of the tire holder apparatus A. Each of the upper ends 10a of each strut member 10L and 10R is formed in a cylindrical shape.

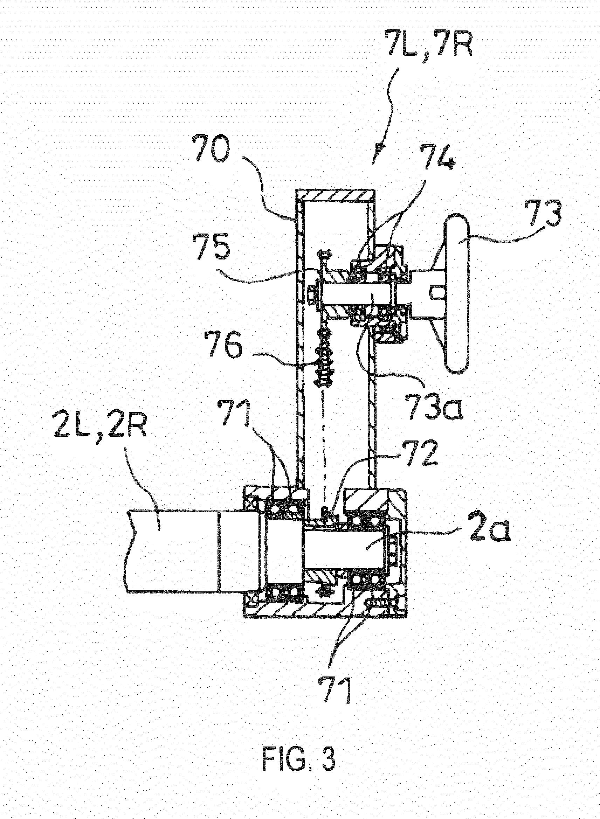

In the lower frame 1B, the lower parts of the left and right strut members 10L and 10R and the lower bridge member 12 are connected to each other using the rotary units 7L and 7R used to rotate the left and right support rollers 2L and 2R. The rotary units 7L and 7R have common structure. As illustrated in FIG. 3, each of the rotary units 7L and 7R has a housing 70, a lower bearing 71, a lower sprocket 72, an upper bearing 74, an upper sprocket 75, and a chain 76. The housing 70 is fixed to the lower frame 1B. The lower bearing 71 is held by the housing 70 to rotatably support the shafts 2a of the support rollers 2L and 2R. The lower sprockets 72 are installed in the outer circumferences of the shafts 2a of the support rollers 2L and 2R. The upper bearing 74 is held by the housing 70 and rotatably supports the shaft 73a of the handle 73. The upper sprocket 75 is attached on the outer circumference of the shaft 73a of the handle 73. The chain 76 transmits rotation of the upper sprocket 75 to the lower sprocket 72. The handle 73 is arranged over the support rollers 2L and 2R. The support rollers 2L and 2R are rotated by rotating the handle 73, so that a rotation angle of the tire W (FIG. 2) loaded on the support rollers 2L and 2R can be adjusted.

As illustrated in FIG. 1, the lower frame 1B is loaded on the cart 4, and the jack 6 is interposed between the cart 4 and the lower bridge member 12 of the lower frame 1B. The support rollers 2L and 2R and the rotary units 7L and 7R are installed in the lower frame 1B. For this reason, by driving the lower bridge member 12 using the jack 6, it is possible to lift or lower the lower frame 1B, the support rollers 2L and 2R, and the rotary units 7L and 7R in an integrated manner. Furthermore, as illustrated in FIG. 2, the cart 4 has a deck portion 40 where the lower frame 1B and the jack 6 are loaded, and a plurality of casters 41 installed in the lower side of the deck portion 40.

The upper frame 1A constituting the frame 1 along with the lower frame 1B is formed in a pillar shape as illustrated in FIG. 1 and has a horizontal structural member 15 stretching between the strut members 10L and 10R. The horizontal structural member 15 extends approximately horizontally between the left and right sides. Furthermore, both ends 15a and 15b of the horizontal structural member 15 are formed in a cylindrical shape.

The height adjustment unit 8 is fixed to the center of the horizontal structural member 15 in an upright state. The upper plate 80 is fixed to the upper end of the height adjustment unit 8, and the holding member 81 is fixed to the upper lateral surface of the height adjustment unit 8. In addition, the support bar 5 is held by the holding member 81.

According to the first embodiment, although not shown in detail, the height adjustment unit 8 has three cylindrical casings retractable in a telescopic manner, a feed screw mechanism housed in the casings, and a handle 82 for driving the feed screw mechanism. In addition, the height adjustment unit 8 expands or contracts by rotating the handle 82, so that it is possible to change a distance between the support rollers 2L and 2R and the support bar 5 by adjusting the height of the support bar 5.

The holding member 81 holds the support bar 5 slidably in the front-rear direction. It is possible to change a distance between the frame 1 and the support portion 51 by gripping the handling portion 52 of the support bar 5 and pushing/pulling the support bar 5.

In addition, the hanger member 9 is fixed to the upper surface of the upper plate 80 installed in the upper end surface of the height adjustment unit 8. As a hook of the crane (not shown) is hooked to the hanger member 9, it is possible to hang the upper frame 1A from the crane. When the upper frame 1A is connected to the lower frame 1B, the frame 1 can be hung from the crane together with the cart 4.

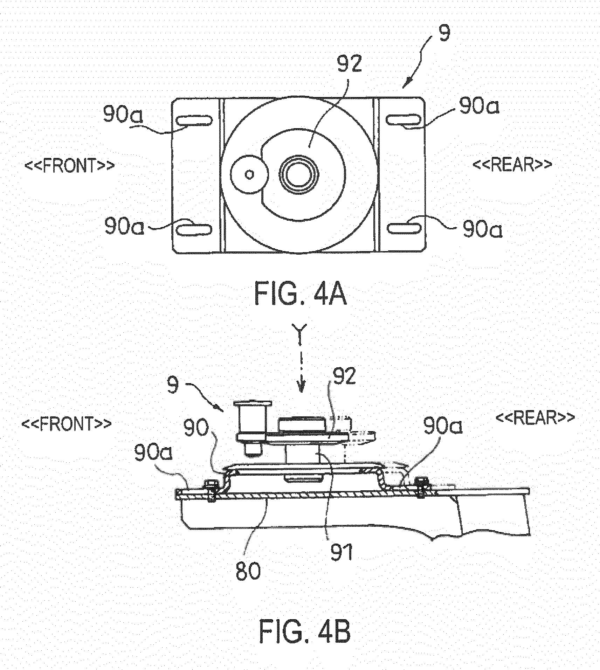

As illustrated in FIGS. 4A and 4B, the hanger member 9 has a connecting plate 90, a hoisting shaft 91, and a flange 92. The connecting plate 90 is fixed to the upper plate 80 using a bolt. The hoisting shaft 91 is erected on the center of the connecting plate 90. The flange 92 is fixed to the upper part of the hoisting shaft 91 and overhangs to the outer circumference of the hoisting shaft 91. A hook of the crane (not shown) is inserted into the gap between the connecting plate 90 and the flange 92 so that the hoisting shaft 91 is nipped by the hook. In addition, a bolt insertion hole 90a provided in the connecting plate 90 is a long hole extending in the front-rear direction. For this reason, a position of the hanger member 9 with respect to the upper plate 80 can be adjusted in the front-rear direction.

The connecting members 3L and 3R (first and second connecting members 3L and 3R) that connect the upper frame 1A to the lower frame 1B to each other in a detachable manner are provided between the upper end 10a of the left strut member 10L and the left end 15a of the horizontal structural member 15 and between the upper end 10a of the right strut member 10R and the right end 15b of the horizontal structural member 15, respectively, as illustrated in FIG. 1. In addition, each of the left and right connecting members 3L and 3R has a connecting member male portion 3A installed in the horizontal structural member 15 and a connecting member female portion 3B installed in the strut members 10L and 10R. The connecting member male portions 3A of each connecting members 3L and 3R have common structure. The connecting member female portions 3B of each connecting members 3L and 3R have common structure. The connecting member male portion 3A of the connecting member 3L and the connecting member male portion 3A of the connecting member 3R are arranged in a plane-symmetrical geometry with respect to the center plane a1 of the tire holder apparatus A. The connecting member female portion 3B of the connecting member 3L and the connecting member female portion 3B of the connecting member 3R are arranged in a plane-symmetrical geometry with respect to the center plane a1 of the tire holder apparatus A.

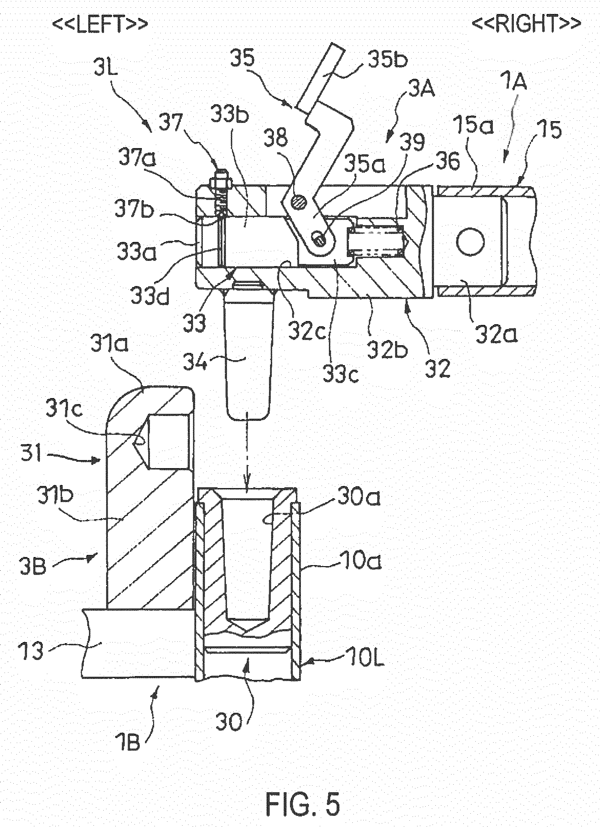

As illustrated in FIG. 5, the connecting member female portion 3B of the left connecting member 3L has a bracket 30 and a block 31. The bracket 30 is fixed to the upper end 10a of the left strut member 10L. The block 31 is fixed to the left lateral surface of the strut member 10L (opposite to the center side of the tire holder apparatus A), and has an upper end 31a protruding upwards from the strut member 10L.

In addition, the bracket 30 is inserted to the upper end 10a of the strut member 10L from the top so as to be fixed to the strut member 10L. The bracket 30 is provided with a vertical hole 30a extending in a vertical direction from the upper end of the bracket 30. The vertical hole 30a is formed in a conical shape having a cross section gradually reduced downwards.

The block 31 has a main body portion 31b fixed to the left strut member 10L and an upper end 31a extending upwards from the main body portion 31b and protruding upwards from the strut member 10L. A horizontal hole 31c is formed in a horizontal direction from the right end (in the center side of the tire holder apparatus A) of the upper end 31a.

The connecting member male portion 3A of the left connecting member 3L has a guide block 32, a stopper 33, a guide 34, a lever 35, a spring 36, and a plunger 37. The guide block 32 is fixed to the left end 15a (opposite to the center side of the tire holder apparatus A) of the horizontal structural member 15. The stopper 33 is inserted into the guide block 32 so that the leading end 33a accesses the horizontal hole 31c. The guide 34 is protrudes downwards from the guide block 32 so as to be inserted into the vertical hole 30a. The lever 35 makes the leading end 33a of the stopper 33 advance to or retreat from the guide block 32. The spring 36 biases the leading end 33a of the stopper 33 to protrude from the guide block 32. The plunger 37 prevents the leading end 33a of the stopper 33 from protruding from the guide block 32.

The guide block 32 has a connecting portion 32a and a main body portion 32b. The connecting portion 32a is inserted into the left end 15a of the horizontal structural member 15 from the left side and is fixed to the horizontal structural member 15. The main body portion 32b extends from the connecting portion 32a to the left side and protrudes from the horizontal structural member 15. In addition, the main body portion 32b of the guide block 32 is formed in a bottomed cylindrical shape having a cavity 32c and is opened to the left side.

The stopper 33 inserted into the guide block 32 is a bar-like member inserted into the main body portion 32b of the guide block 32 from the left side. The stopper 33 has a barrel portion 33b, a force input portion 33c, a leading end 33a, and an annular engagement groove 33d. The barrel portion 33b makes sliding contact with the inner circumferential surface of the guide block 32. The force input portion 33c extends to the right side of the barrel portion 33b branching in the front-rear direction (only the rear side of the force input portion 33c is illustrated, and the front side of the force input portion is omitted). The leading end 33a extends to the left side from the barrel portion 33b. The annular engagement groove 33d is formed in a boundary between the barrel portion 33b and the leading end 33a along a circumferential direction. The force input portion side of the stopper 33 is inserted into the guide block 32 deeply.

The guide 34 that protrudes downwards from the guide block 32 and is inserted into the vertical hole 30a is formed in a conical shape having an outer circumference tapered to match the vertical hole 30a. The guide 34 has a cross section gradually reduced to the lower end from the upper end corresponding to the guide block side.

The lever 35 that forces the leading end 33a of the stopper 33 to protrude from the guide block 32 is rotatably supported by the guide block 32 using a pin 38. The lever 35 has an actuating portion 35a and a handling portion 35b. The actuating portion 35a extends from the pin 38 to the force input portion 33c. The handing portion 35b is installed in a leading end of a portion extending from the pin 38 to the outside of the guide block 32. In addition, a long hole is provided in the leading end side of the actuating portion 35a, and a pin 39 stretching across the force input portion 33c penetrates through the long hole.

The guide block 32 is installed with the pin 38 that rotatably supports the lever 35, and the stopper 33 is installed with the pin 39 penetrating through the long hole provided in the actuating portion 35a of the lever 35, so that the pin 39 can move inside the long hole of the actuating portion 35a. As a result, rotation of the actuating portion 35a is allowed so that the pin 39 can move inside the guide block 32 along with the stopper 33.

The spring 36 that biases the leading end 33a of the stopper 33 to protrude from the guide block 32 is housed in the guide block 32 in a compressed state and abuts on the right end of the stopper 33.

The plunger 37 that prevents the leading end 33a of the stopper 33 from protruding from the guide block 32 is well known in the art and thus will not be described in detail. The plunger 37 includes a housing 37a having a cavity, an engagement portion 37b inserted into the housing 37a in a retractable manner, and a spring (not shown) that biases the engagement portion 37b to protrude. In addition, the plunger 37 is screwed to the guide block 32 to force the engagement portion 37b to protrude to the cavity 32c of the guide block 32. As illustrated in FIG. 5, when the engagement portion 37b of the plunger 37 is locked to the engagement groove 33d of the stopper 33 to make an engagement state, the plunger 37 prevents the leading end 33a of the stopper 33 from protruding from the guide block 32. In addition, the engagement portion 37b is formed in a spherical shape, and the engagement groove 33d has a V-shaped cross section. As the handling portion 35b of the lever 35 is turned down, the engagement portion 37b slidingly ejects from the engagement groove 33d and is released from the engagement state.

Meanwhile, the right connecting member 3R has structure common with that of the left connecting member 3L as described above. The left connecting member 3L and the right connecting member 3R are arranged in a plane-symmetrical geometry with respect to the center plane a1 of the tire holder apparatus A. In the connecting member female portions 3B of the left and right connecting members 3L and 3R, the vertical hole 30a and the horizontal hole 31c are arranged in a L-shape and are opened to the inside. The opening of the horizontal hole 31c of the connecting member female portion 3B of the connecting member 3L is arranged to match the opening of the horizontal hole 31c of the connecting member female portion 3B of the connecting member 3R. In addition, in the connecting member male portions 3A of the left and right connecting members 3L and 3R, the stoppers 33 are arranged in a back-to- back manner.

Next, a description will be made for operations of the connecting members 3L and 3R of the tire holder apparatus A according to the first embodiment.

When the upper frame 1A is connected to the lower frame 1B, the levers 35 are raised by turning up the handling portions 35b of the levers 35 of the left and right connecting members 3L and 3R as illustrated in FIG. 5. As a result, the actuating portions 35a are rotated with respect to the center side of the tire holder apparatus A (counterclockwise in the left connecting member 3L and clockwise in the right connecting member 3R). For this reason, the leading end 33a of the stopper 33 is housed in the guide block 32. When the leading end 33a is housed in the guide block 32, the stopper 33 is biased to protrude from the guide block 32 by virtue of the spring 36. However, since the engagement portion 37b of the plunger 37 is engaged with the engagement groove 33d of the stopper 33, the leading end 33a of the stopper 33 remains to be housed in the guide block 32.

Subsequently, the guides 34 of the left and right connecting members 3L and 3R are inserted into the vertical holes 30a of the brackets 30 from the top. As a result, the upper frame 1A is supported by the lower frame 1B, and the leading end 33a of the stopper 33 faces the horizontal hole 31c of the block 31.

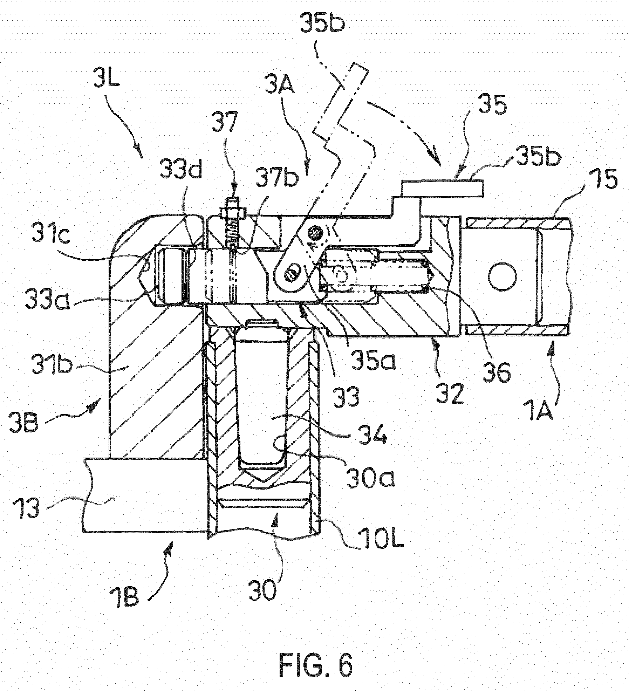

Subsequently, as the handling portion 35b of the lever 35 is forced down, the engagement portion 37b of the plunger 37 slidingly ejects from the engagement groove 33d of the stopper 33 so that the engagement state between the plunger 37 and the stopper 33 is released. In addition, as the lever 35 is turned down to rotate the actuating portion 35a to the side opposite to the center side of the tire holder apparatus A (clockwise in the left connecting member 3L and counterclockwise in the right connecting member 3R) as indicated by the solid line of FIG. 6, the leading end 33a of the stopper 33 protrudes from the guide block 32 and is inserted into the horizontal hole 31c.

As a result, the upper and lower frames 1A and 1B are connected to each other. Even when the upper frame 1A is lifted in this state, the connection between the upper and lower frames 1A and 1B is not released, and the connected state remains because the leading end 33a of the stopper 33 is inserted into the horizontal hole 31c.

Meanwhile, when the upper and lower frames 1A and 1B are disconnected and disassembled, the lever 35 is raised by turning up the handling portion 35b of the lever 35 as indicated by the two-dotted chain line of FIG. 6. As a result, the leading end 33a of the stopper 33 is housed in the guide block 32, and the engagement portion 37b of the plunger 37 is engaged with the engagement groove 33d of the stopper 33. As a result, the leading end 33a of the stopper 33 remains to be housed in the guide block 32. Therefore, the guide 34 is separated from the vertical hole 30a by lifting the upper frame 1A so that it is possible to disassemble the upper and lower frames 1 A and 1B.

Next, a description will be made for functional effects of the tire holder apparatus A according to the first embodiment in comparison with a comparative example.

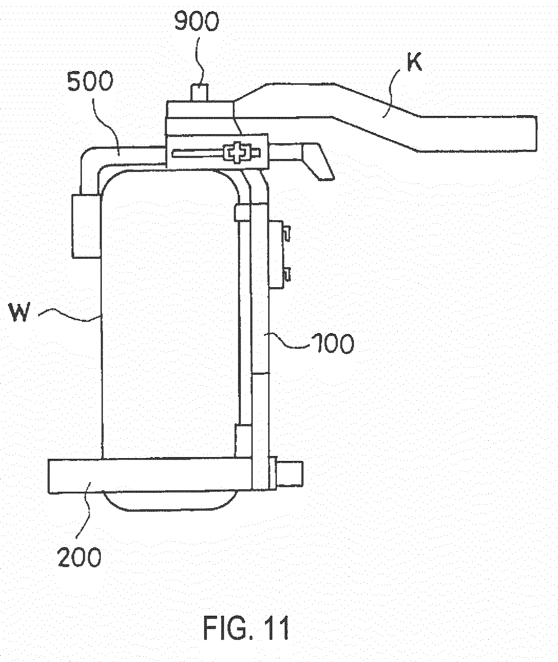

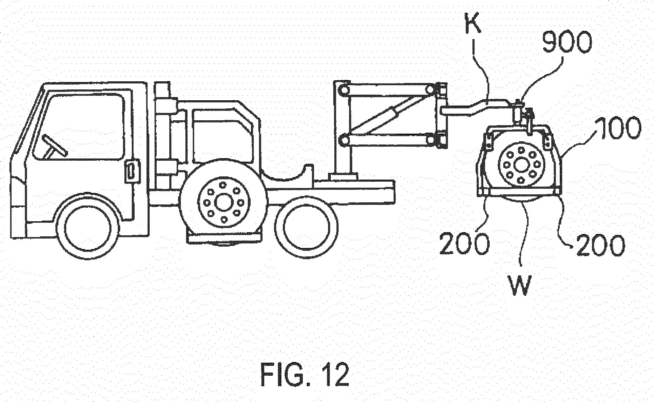

As illustrated in FIGS. 11 and 12, the tire holder apparatus as a comparative example has a frame 100, a pair of support rollers 200, and a support bar 500. The pair of support rollers 200 is installed in the frame 100 to support a tire W from the bottom. The support bar 500 is installed in the frame 100 to support the upper part of the tire W. In addition, the frame 100 is installed with a hanger member 900. The tire holder apparatus can be hung from the crane K by hoisting the hanger member 900 using the crane K.

Similar to the comparative example, according to the first embodiment, the tire holder apparatus A has a frame 1 and a pair of support rollers 2L and 2R installed in the frame 1 to load a tire W (FIG. 2).

However, according to the first embodiment, the frame 1 is disassemblable into upper and lower parts. The frame 1 includes an upper frame 1A, a lower frame 1B installed with a pair of support rollers 2L and 2R, and connecting members 3L and 3R used to detachably connect the upper and lower frames 1A and 1B. Furthermore, in the tire holder apparatus A, the lower frame 1B is loaded on a cart 4.

That is, according to the first embodiment, it is possible to disassemble the frame 1 into the upper and lower frames 1A and 1B, and the lower frame 1B is loaded on the cart 4. For this reason, it is possible to move a tire W only using the lower frame 1B without using a crane.

Therefore, using the tire holder apparatus A, it is possible to allow a tire W to approach an aircraft frame by loading the tire W on the support rollers 2L and 2R, which was difficult in the prior art. Therefore, it is possible to increase types of the airframes where the tire holder apparatus A is applicable.

According to the first embodiment, the tire holder apparatus A has the jack 6 interposed between the lower frame 1B and the cart 4 to lift or lower the lower frame 1B.

Therefore, it is possible to replace a tire W by lifting or lowering the support rollers 2L and 2R along with the lower frame 1B using the jack 6. In particular, when a tire W is transported only using the lower frame 1B, it is possible to appropriately replace the tire W.

According to the first embodiment, the lower frame 1B has the strut members 10L and 10R erected from the rear (one side) ends of both support rollers 2L and 2R, respectively. In addition, the upper frame 1A has the horizontal structural member 15 stretching between the strut members 10L and 10R. Furthermore, the connecting member 3L is provided between the upper end 10a of the left (one side) strut member 10L and the left end 15a of the horizontal structural member 15. The connecting member 3R is provided between the upper end 10a of the right (the other side) strut member 10R and the right end 15b of the horizontal structural member 15.

Therefore, when the handle 13 is installed in the pair of strut members 10L and 10R of the lower frame 1B as in the first embodiment, a user can grip the handle 13 installed in the strut members 10L and 10R in addition to the strut members 10L and 10R to move the lower frame 1B. Furthermore, when a tire W is transported only using the lower frame 1B, it is possible to suppress a collapse of the tire W using a belt (not illustrated) by fastening an end of the belt to the hanger portion 14. Therefore, even when a tire W is transported only using the lower frame 1B, it is possible to provide satisfactory workability.

The height adjustment unit 8 or the support bar 5 is installed in the horizontal structural member 15 of the upper frame 1A so that the upper side of the tire holder apparatus A becomes bulkier. However, it is possible to reduce a size of the tire holder apparatus A and easily move a tire W even in a narrow space by removing the upper frame 1A.

According to the first embodiment, each of the connecting members 3L and 3R has the connecting member male portion 3A installed in the horizontal structural member 15 and the connecting member female portion 3B installed in the strut members 10L and 10R.

The connecting member female portion 3B has the vertical hole 30a extending vertically and having the upper opening, and the horizontal hole 31c extending horizontally. The connecting member male portion 3A has the guide block 32, the stopper 33, and the guide 34. The guide block 32 is fixed to the horizontal structural member 15. The stopper 33 is inserted into the guide block 32 so that the leading end 33a accesses the horizontal hole 31c. The guide 34 protrudes downwards from the guide block 32 and is inserted into the vertical hole 30a.

Therefore, the guide 34 is inserted into the vertical hole 30a, and the leading end 33a of the stopper 33 is positioned to face the horizontal hole 31a. Then, the leading end 33a of the stopper 33 is inserted into the horizontal hole 31c. For this reason, it is possible to easily and robustly connect the upper frame 1A provided with the connecting member male portion 3A to the lower frame 1B provided with the connecting member female portion 3B.

According to the first embodiment, the connecting member male portion 3A has the spring 36 and the plunger 37. The spring 36 biases the leading end 33a of the stopper 33 to protrude from the guide block 32. The plunger 37 prevents the leading end 33a of the stopper 33 from protruding from the guide block 32.

Therefore, using the spring 36, it is possible to prevent the upper and lower frames 1A and 1B from being disconnected. In addition, using the plunger 37, it is possible to prevent the leading end 33a of the stopper 33 from protruding from the guide block 32. For this reason, it is possible to prevent the leading end 33a of the stopper 33 from protruding from the guide block 32 as long as the lever 35 is not manipulated and prevent the upper and lower frames 1A and 1B from being connected. Accordingly, it is possible to easily disconnect (disassemble) the upper and lower frames 1A and 1B.

According to the first embodiment, the connecting member female portion 3B has the bracket 30 and the block 31. The bracket 30 is fixed to the upper end 10a of the strut members 10L and 10R. The block 31 is fixed to the lateral surface (the left side in the left connecting member 3L and the right side in the right connecting member 3R) positioned in the side opposite to the center side of the tire holder apparatus A in the strut members 10L and 10R such that the upper end 31a protrudes from the strut members 10L and 10R. The vertical hole 30a is provided in the bracket 30, and the horizontal hole 31c is provided in the block 31.

Therefore, the effects of this invention can be sufficiently obtained just by installing the bracket 30 or the block 31 having the vertical hole 30a or the horizontal hole 31c in the strut members 10L and 10R. Compared to a case where the vertical hole 30a or the horizontal hole 31c is directly provided in the strut members 10L and 10R, it is possible to easily fabricate the vertical hole 30a or the horizontal hole 31c. Furthermore, it is possible to simplify the structures of the strut members 10L and 10R.

According to the first embodiment, the connecting member male portion 3A of the connecting member 3L (first connecting member) and the connecting member male portion 3A of the connecting member 3R (second connecting member) have common structure and are arranged in a plane-symmetrical geometry with respect to the center plane a1 of the tire holder apparatus A. Similarly, the connecting member female portion 3B of the connecting member 3L (first connecting member) and the connecting member female portion 3B of the connecting member 3R (second connecting member) have common structure and are arranged in a plane-symmetrical geometry with respect to the center plane a1 of the tire holder apparatus A.

Therefore, even when a plurality of connecting members 3L and 3R are provided as in the first embodiment, it is possible to reduce the number of components included in the plurality of connecting members 3L and 3R and easily and simply connect or disconnect the upper and lower frames 1A and 1B.

According to the first embodiment, the vertical hole 30a is formed in a conical shape, and its cross section is gradually reduced downwards. In addition, the guide 34 has an outer circumference tapered to match the vertical hole 30a and is formed in a conical shape.

Therefore, it is possible to easily insert the guide 34 into the vertical hole 30a. In addition, it is possible to easily position the stopper 33 and the horizontal hole 31c by inserting the guide 34 into the vertical hole 30a.

According to the first embodiment, the tire holder apparatus A has the support bar 5 that supports an upper part of a tire W, and the holding member 81 that holds the support bar 5 slidably along the front-rear direction.

Therefore, it is possible to change a distance between the support portion 51 of the support bar 5 that supports the tire W and the frame 1 and hold various types of tires W having different tire widths (axial lengths) using a single tire holder apparatus A.

According to the first embodiment, the tire holder apparatus A has the height adjustment unit 8 installed in the upper frame 1A to change a height of the support bar 5.

Therefore, it is possible to change a distance between the support bar 5 that supports a tire W and the support rollers 2L and 2R and hold various types of tires W having different outer diameters using a single tire holder apparatus A.

According to the first embodiment, the tire holder apparatus A has the upper plate 80 fixed to the upper end of the height adjustment unit 8 and the hanger member 9 fixed to the upper surface of the upper plate 80. The hanger member 9 has the connecting plate 90 fixed to the upper plate 80 using a bolt. The bolt insertion hole 90a formed in the connecting plate 90 is a long hole extending in the front-rear direction.

Therefore, it is possible to adjust the position of the hanger member 9 with respect to the upper plate 80 along the front-rear direction. Therefore, it is possible to adjust the position such that the support rollers 2L and 2R level off when the tire holder apparatus A is hung from the crane.

According to the first embodiment, the support rollers 2L and 2R are installed in the lower frame 1B using the rotary units 7L and 7R. Each of the rotary units 7L and 7R has the housing 70, the lower bearing 71, the lower sprocket 72, the upper bearing 7, the upper sprocket 75, and the chain 76. The housing 70 is fixed to the lower frame 1B. The lower bearing 71 is held by the housing 70 and rotatably supports the shafts 2a of the support rollers 2L and 2R. The lower sprocket 72 is installed in the outer circumferences of the shafts2a of the support rollers 2L and 2R. The upper bearing 74 is held by the housing 70 and rotatably supports the shaft 73a of the handle 73. The upper sprocket 75 is installed in the outer circumference of the shaft 73a of the handle 73. The chain 76 transmits the rotation of the upper sprocket 75 to the lower sprocket 72. The handle 73 is arranged over the support rollers 2L and 2R.

Therefore, even when the positions of the support rollers 2L and 2R are lowered, it is possible to maintain the position of the handle 73 to be higher than that of the cart 4 and avoid interference between the handle 73 and the cart 4.

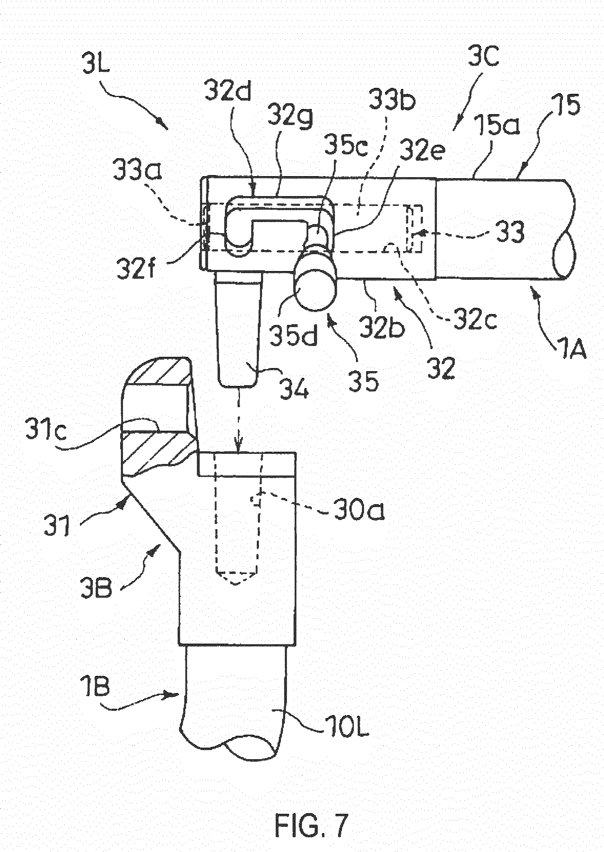

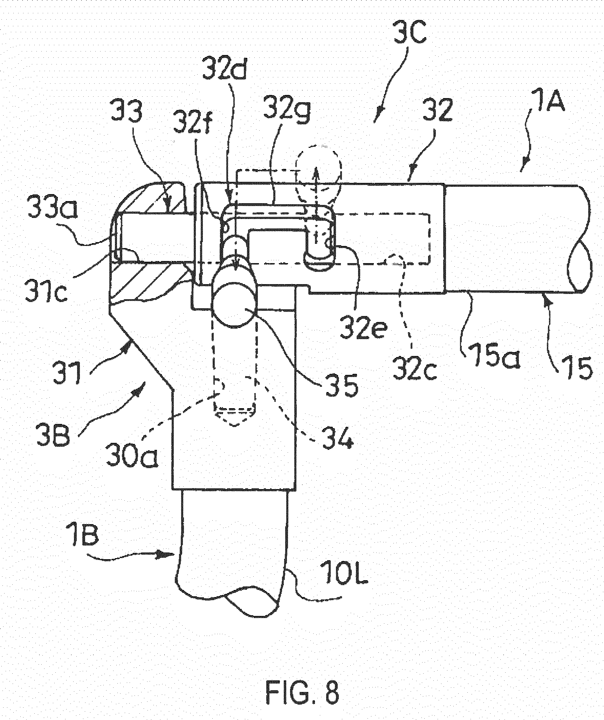

Next, a description will be made for a modification of the tire holder apparatus A of the first embodiment of this invention with reference to FIGS. 7 and 8. In the tire holder apparatus of this modification, a part of the configuration of the connecting member male portion 3A of the connecting members 3L and 3R of the first embodiment is modified. Since other configuration and functional effects are similar to those of the first embodiment, the descriptions of the first embodiment and FIGS. 1 to 6 will be referenced. Similarly, in this modification, the connecting member male portions 3C of the left and right connecting members 3L and 3R have common structure, and they are arranged in a plane-symmetrical geometry with respect to the center plane a1 of the tire holder apparatus. The connecting member female portions 3B of the left and right connecting members 3L and 3R have common structure, and they are arranged in a plane-symmetrical geometry with respect to the center plane a1 of the tire holder apparatus. Therefore, a description will now be made in detail for the configuration of the connecting member male portion 3C of the left connecting member 3L.

Similar to the first embodiment, the connecting member male portion 3C of this modification has a guide block 32, a stopper 32, a guide 34, and a lever 35. The guide block 32 is fixed to the left end 15a of the horizontal structural member 15. The stopper 33 is inserted into the guide block 32, and the leading end 33a accesses the horizontal hole 31c of the connecting member female portion 3B. The guide 34 protrudes downwards from the guide block 32 and is inserted into the vertical hole 30a of the connecting member female portion 3B. The lever 35 causes the leading end 33a of the stopper 33 to advance to or retreat from the guide block 32. However, this modification is different from the first embodiment in that the spring 36 and the plunger 37 are not provided.

Similar to the first embodiment, the guide block 32 has a connecting portion 32a (not shown) and a main body portion 32b that has a cavity 32c and is formed in a bottomed cylindrical shape. The guide block 32 has a guide groove 32d that guides the lever 35 on a lateral side. The guide groove 32d has a pair of vertical grooves 32e and 32f and a horizontal groove 32g. The pair of vertical grooves 32e and 32f is formed to vertically extend along a circumferential direction of the guide block 32 and is arranged in parallel with an axial direction (longitudinal direction) of the guide block 32. The horizontal groove 32g links the upper ends of the vertical grooves 32e and 32f to each other. The lower end of the vertical groove 32e positioned in the center side of the tire holder apparatus A slightly protrudes to the left side.

Similar to the first embodiment, the stopper 33 inserted into the guide block 32 is a bar-like member inserted into the main body portion 32b of the guide block 32 from the left side. The stopper 33 has a barrel portion 33b making sliding contact with the inner circumferential surface of the guide block 32 and a leading end 33a extending to the side opposite to the center side of the tire holder apparatus A from the barrel portion 33b. The barrel portion side of the stopper 33 is inserted into the guide block 32 deeply.

In addition, similar to the first embodiment, the guide 34 that protrudes downwards from the guide block 32 and is inserted into the vertical hole 30a of the connecting member female portion 3B has an outer circumference tapered to match the vertical hole 30a and is formed in a conical shape. The guide 34 has a cross section gradually reduced from the upper end corresponding to the guide block side to the lower end.

Unlike the first embodiment, the lever 35 that causes the leading end 33a of the stopper 33 to advance to or retreat from the guide block 32 is fixed to the lateral surface of the barrel portion 33b of the stopper 33 in an upright state. The lever 35 has a shaft portion 35c penetrating through the guide groove 32d and extending to the outside of the guide block 32 and a handling portion 35d installed in the leading end of the shaft portion 35c.

The guide 34 is inserted into the vertical hole 30a of the connecting member female portion 3B from the top while the lever 35 is arranged in the guide groove 32e positioned in the center side of the tire holder apparatus A. In this case, the upper frame 1A is supported to the lower frame 1B, and the leading end 33a of the stopper 33 faces the horizontal hole 31c of the block 31. Subsequently, as the lever 35 is manipulated as illustrated in FIG. 8, the lever 35 is arranged in the vertical groove 32f positioned in the side opposite to the center side of the tire holder apparatus A. In this case, since the stopper 33 moves to retreat from the center of the tire holder apparatus A along with the lever 35, and the leading end 33a of the stopper 33 is inserted into the horizontal hole 31c of the connecting member female portion 3B, the upper and lower frames 1A and 1B are connected to each other. It is noted that the horizontal movement of the lever 32f is restricted by the guide block 32 when the lever 35 abuts on the lower end of the vertical groove 32f positioned in the side opposite to the center side of the tire holder apparatus A. In this case, the upper and lower frames 1A and 1B are not disconnected, and the connection state can be maintained.

That is, similar to the first embodiment, the guide 34 is inserted into the vertical hole 30a, and the leading end 33a of the stopper 33 is positioned to face the horizontal hole 31a. Then, by inserting the leading end 33a of the stopper 33 into the horizontal hole 31c, it is possible to easily and robustly connect the upper frame 1A provided with the connecting member male portion 3A to the lower frame 1B provided with the connecting member female portion 3B.

In this modification, the connecting member male portion 3C has the lever 35 that causes the leading end 33a of the stopper 33 to advance to or retreat from the guide block 32. The guide block 32 is provided with the guide groove 32d that guides the lever 35. Furthermore, the guide groove 32d has the pair of vertical grooves 32e and 32f and the horizontal groove 32g. The pair of vertical grooves 32e and 32f is formed to extend vertically and are arranged in parallel with a longitudinal direction of the guide block 32. The horizontal groove 32g links the top ends of the vertical grooves 32e and 32f to each other. In addition, the lever 35 is fixed to the lateral surface of the stopper 33 in an upright state and extends to the outside of the guide block 32 through the guide groove 32d.

By causing the lever 35 to abut on the lower side of the vertical grooves 32e and 32f, it is possible to remain the leading end 33a of the stopper 33 to be housed in the guide block 32 or to protrude from the guide block 32. Therefore, it is possible to simplify the configuration of the connecting member male portion 3C.

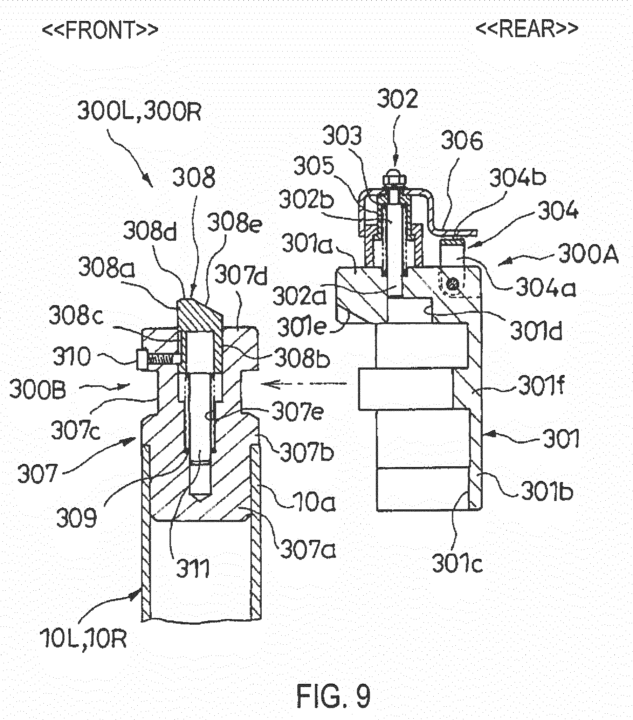

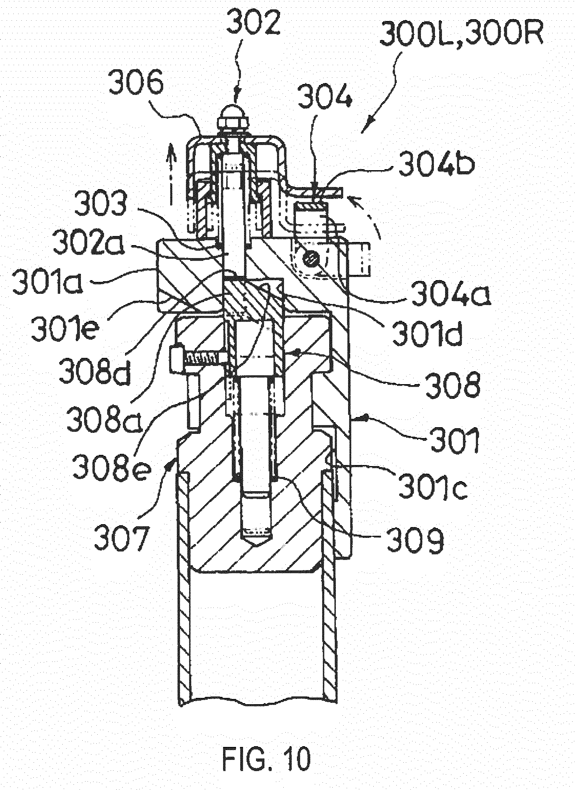

Next, a description will be made for a tire holder apparatus according to a second embodiment of this invention with reference to FIGS. 9 and 10. The tire holder apparatus according to the second embodiment is different from the first embodiment only in the configuration of the connecting member. Therefore, hereinafter, a description will be made mainly for the configuration, operations, and functional effects of the connecting members 300L and 300R of the tire holder apparatus according to the second embodiment. It is noted that the descriptions of the first embodiment and FIGS. 1 to 6 will be referenced since other configurations and functional effects are similar to those of the first embodiment.

Similar to the first embodiment, the connecting members 300L and 300R according to the second embodiment are provided between the upper end 10a of the left strut member 10L and the left end 15a of the horizontal structural member 15 and between the upper end 10a of the right strut member 10R and the right end 15b of the horizontal structural member 15, respectively. In addition, each of the left and right connecting members 300L and 300R have the connecting member female portion 300A installed in the horizontal structural member 15 and the connecting member male portion 300B installed in the strut members 10L and 10R. The connecting member female portion 300A of the connecting member 300L and the connecting member female portion 300A of the connecting member 300R have common structure. The connecting member male portion 300B of the connecting member 300L and the connecting member male portion 300B of the connecting member 300R have common structure.

As illustrated in FIG. 9, each of the connecting member female portions 300A of the connecting members 300L and 300R has a housing 301, a pin 302, a spring 303, and a lever 304. The housing 301 is fixed to the end of the horizontal structural member 15 positioned in the side opposite to the center side of the tire holder apparatus A (the left side of the left connecting member 300L and the right side of the right connecting member 300R). The pin 302 is installed in the housing 301 to cause the leading end 302a to access the housing 301. The spring 303 biases the leading end 302a of the pin 302 to protrude from the housing 301. The lever 304 prevents the leading end 302a of the pin 302 from being inserted into the housing 301.

The housing 301 has a lid portion 301a and a main body portion 301b having a cylindrical shape extending downwards from the outer periphery of the lid portion 301a. The housing 301 is formed in a ceiled cylindrical shape and has a cavity 301c inside the main body portion 301b.

The lid portion 301a has a lower surface of which the center portion is hollowed to form a vertical hole 301d, and the vertical hole 301d is connected to the cavity 301c. A chamfered surface 301e vertically inclined is provided in the front side of the lower outer edge of the lid portion 301a. The upper end of the chamfered surface 301e is connected to the front surface of the lid potion 301 a.

The main body portion 301b of the housing 301 is opened in the front and lower sides. Since the axial center portion 301f of the main body portion 301b of the housing 301 overhangs to the inside, the cavity 301c provided inside the main body portion 301b has a bottleneck. Therefore, the front opening of the cavity 301c has a bottleneck in the center of the axial direction.

The pin 302 that causes the leading end 302a to access the housing 301 penetrates through the center of the lid portion 301a. The pin 302 has a leading end 302a that accesses the vertical hole 301d and a protrusion 302b that is connected to the upper side of the leading end 302a and protrudes outwards from the housing 301. In addition, a casing 305 is arranged in the outer circumference of the protrusion 302b and is installed to the protrusion 302b. The extension 306 extends to the rear side from the protrusion 302b and is installed to the protrusion 302b.

The spring 303 that biases the leading end 302a of the pin 302 to retreat from the housing 301 is interposed between the upper surface of the lid portion 301 and the casing 305.

The lever 304 that prevents the leading end 302a of the pin 302 from being inserted into the housing 301 has a pair of handling pieces 304a (only one of the handling pieces 304a is illustrated, and the other handling piece is not illustrated) and a supporting piece 304b stretching between the handling pieces 304a. The lever 304 is formed in a C-shape as seen from the front and rear sides. Using the handling pieces 304a, the rear side of the lid portion 301a of the housing 301 is nipped, and the leading end of each handling piece 304a is rotatably connected to the lid portion 301a. In addition, if the handling piece 304a is erected, the supporting piece 304b is placed above the lid portion 301a. If the handling piece 304a is laid down, the supporting piece 304b is arranged in the rear side of the lid portion 301a. Furthermore, the lever 304 is configured such that the supporting piece 304b and the extension 306 face to each other when the handling piece 304a is erected.

Meanwhile, each connecting member male portion 300B of each connecting member 300L and 300R has a guide block 307, a stopper 308, a spring 309, and a bolt 310. The guide block 307 is fixed to the upper end 10a of the strut member 10L and 10R. The stopper 308 is inserted into the guide block 307, and the leading end 308a accesses the vertical hole 301d. The spring 309 biases the leading end 308a of the stopper 308 to protrude from the guide block 307. The bolt 310 stops rotation of the stopper 308.

The guide block 307 has a connecting portion 307a, a lower large-diameter portion 307b, a bottleneck portion 307c, and an upper large-diameter portion 307d. The connecting portion 307a is inserted into the upper end 10a of the strut member 10L and 10R formed in a cylindrical shape from the top and is fixed to the strut member 10L and 10R. The lower large-diameter portion 307b is connected to the upper side of the connecting portion 307a and has a diameter larger than that of the connecting portion 307a. The bottleneck portion 307c is connected to the upper side of the lower large-diameter portion 307b and has a diameter smaller than that of the lower large-diameter portion 307b. The upper large-diameter portion 307d is connected to the upper side of the bottleneck portion 307c and has a diameter larger than that of the bottleneck portion 307c. In addition, the guide block 307 is formed in a bottomed cylindrical shape with a cavity 307e and is opened to the upper side.

The stopper 308 is inserted into the guide block 307 from the top. The stopper 308 has a leading end 308a and a cylindrical barrel portion 308b. The leading end 308a has a trapezoidal shape as seen in a lateral view. The barrel portion 308b is connected to the lower side of the leading end 308a. A groove 308c is formed in the outer circumference of the barrel portion 308b along the axial direction, and a shaft member 311 is inserted into the barrel portion 308b. In addition, the upper surface of the leading end 308a has a horizontal surface 308d arranged in the front side and a chamfered surface 308e inclined downwards from the rear end of the horizontal surface 308d.

The spring 309 that biases the leading end 308a of the stopper 308 to protrude from the guide block 307 is inserted into the guide block 307 in a compressed state and abuts on the lower end of the barrel portion 308b of the stopper 308.

The bolt 310 that stops rotation of the stopper 308 is screwed to the guide block 307. The leading end of the bolt 310 protrudes to the inside of the cavity 307e of the guide block 307 and is arranged in the groove 308c of the stopper 308. Furthermore, the bolt 310 also serves as a clasp of the stopper 308.

Next, a description will be made for operations of the connecting members 300L and 300R of the tire holder apparatus according to the second embodiment.

When the upper frame 1A is connected to the lower frame 1B, the handling pieces 304a of the lever 304 of the left and right connecting members 300L and 300R are maintained in an upright state as illustrated in FIG. 9. As a result, the supporting piece 304b of the lever 304 is arranged under the extension 306 to prevent the leading end 302a of the pin 302 from protruding to the inside of the vertical hole 301d.

Subsequently, the housing 301 is horizontally fitted to the rear side of the guide block 307 in the left and right connecting members 300L and 300R. In this case, the chamfered surface 308e of the stopper 308 makes sliding contact with the chamfered surface 301e of the lid portion 301a. In addition, resisting to a biasing force of the spring 309 for biasing the stopper 308, the leading end 308a of the stopper 308 is inserted into the guide block 307.

As the guide block 307 is perfectly inserted into the cavity 301c of the housing 301 as illustrated in FIG. 9, the stopper 308 and the vertical hole 301d are arranged coaxially. For this reason, the leading end 308a of the stopper 308 is extruded from the guide block 307 and is inserted into the vertical hole 301d by virtue of the biasing force of the spring 309 for biasing the stopper 308.

Therefore, the upper and lower frames 1A and 1B are connected to each other. Even when the upper frame 1A is pressed to the rear side in this state, the leading end 308a of the stopper 308 remains to be inserted into the vertical hole 301d because the stopper 308 is biased by the spring 309. In addition, the lever 304 prevents the leading end 302a of the pin 302 from being inserted into the vertical hole 301d. For this reason, the upper and lower frames 1A and 1B are not disconnected and can remain in the connected state.

Meanwhile, when the upper and lower frames 1A and 1B are disconnected and disassembled, first, the handling piece 304a of the lever 304 is laid down, and the supporting piece 304b is turned to the rear side of the lid portion 301a as indicated by the two-dotted chain line in FIG. 10. In addition, resisting to the biasing forces of the spring 303 for biasing the pin 302 and the spring 309 for biasing the stopper 308, the leading end 302a of the pin 302 is inserted into the vertical hole 301d, and the pin 302 inserts the leading end 308a of the stopper 308 into the guide block 307. As a result, it is possible to disassemble the upper and lower frames 1A and 1B by extruding the guide block 307 from the housing 301 to the front side.

Next, a description will be made for functional effects of the connecting members 300L and 300R provided in the tire holder apparatus according to the second embodiment.

Similar to the first embodiment, according to the second embodiment, the frame 1 can be disassembled into the upper and lower frames 1A and 1B. In addition, since the lower frame 1B is loaded on the cart 4, it is possible to transport a tire W only using the lower frame 1B without hoisting the tire holder apparatus using a crane.

Therefore, using the tire holder apparatus, it is possible to allow a tire W to approach an aircraft frame by loading the tire W on the support rollers 2L and 2R, which was difficult in the prior art. Accordingly, it is possible to increase types of the airframes where the tire holder apparatus is applicable.

Similar to the first embodiment, according to the second embodiment, the connecting members 300L and 300R are provided between the upper end 10a of the left (one side) strut member 10L and the left end 15a of the horizontal structural member 15 and between the upper end 10a of the right (the other side) strut member 10R and the right (the other side) end 15b of the horizontal structural member 15, respectively.

Therefore, when the handles 13 are installed in the pair of the strut members 10L and 10R of the lower frame 1B, a user can move the lower frame 1B by gripping the handle 13 installed in the strut members 10L and 10R in addition to the strut members 10L and 10R. In addition, when a tire W is transported only using the lower frame 1B, it is possible to suppress a collapse of the tire W using a belt (not illustrated) by fastening an end of the belt to the hanger portion 14. Therefore, even when a tire W is transported only using the lower frame 1B, it is possible to provide satisfactory workability.

The height adjustment unit 8 or the support bar 5 is installed in the horizontal structural member 15 of the upper frame 1A, and the upper side becomes bulkier. However, it is possible to reduce a size of the tire holder apparatus A and easily move a tire W even in a narrow space by uninstalling the upper frame 1A.

According to the second embodiment, each of the connecting members 300L and 300R has the connecting member female portion 300A installed in the horizontal structural member 15 and the connecting member male portion 300B installed in the strut member 10L and 10R, respectively.

The connecting member female portion 300A has the housing 301 fixed to the end in the side (the left side in the left connecting member 300L and the right side in the right connecting member 300R) opposite to the center side of the tire holder apparatus A. The housing 301 formed in a ceiled cylindrical shape has the lid portion 301a and the main body portion 301b extending downwards from the outer edge of the lid portion 301a and having a cylindrical shape. In addition, the main body portion 301b has the cavity 301c inside and is opened in the front and lower sides. Furthermore, in the lower center of the lid portion 301a, the vertical hole 301d connected to the cavity 301c is provided.

Meanwhile, the connecting member male portion 300B has the guide block 307 fixed to the upper end 10a of the strut member 10L and 10R, and the stopper 308 that is inserted into the guide block 307 and has the leading end 308a accessing the vertical hole 301d.

The guide block 307 is inserted into the cavity 301c of the housing 301, and the leading end 308a of the stopper 308 is inserted into the vertical hole 301d. Therefore, it is possible to easily connect the upper frame 1A installed with the connecting member female portion 300A to the lower frame 1B installed with the connecting member male portion 300B.

Since the upper and lower frames 1A and 1B can be connected to each other just by horizontally moving either the housing 301 or the guide block 307, it is possible to easily perform a connecting operation.

According to the second embodiment, the connecting member female portion 300A has the pin 302 and the lever 304. The pin 302 is installed in the housing 301 to allow the leading end 302a to access the vertical hole 301d. The lever 304 prevents the leading end 302a of the pin 302 from being inserted into the vertical hole 301d. The connecting member male portion 300B has the spring 309 that biases the stopper 308 to force the leading end 308 of the stopper 308 to retreat from the guide block 307.

Therefore, using the spring 309, it is possible to prevent the upper and lower frames 1A and 1B from being disconnected. In addition, using the lever 304, it is possible to prevent the leading end 302a of the pin 302 from protruding to the inside of the vertical hole 301d. Therefore, it is possible to prevent the upper and lower frames 1A and 1B from being disconnected as the leading end 203a of the pin 302 forcibly inserts the stopper 308 into the guide block 307.

Although embodiments of this invention have been described hereinbefore, it would be appreciated that various modifications, changes, and alterations may be possible.

For example, in each of the aforementioned embodiments, the tire holder apparatus is used to carry and replace an aircraft tire W by holding the tire W. Alternatively, the tire holder apparatus may be applied to various tires in fields other than the aircraft.

In addition, in each of the aforementioned embodiments, the tire holder apparatus comprises the frame 1, the support rollers 2L and 2R, the cart 4, the support bar 5, the rotary units 7L and 7R, the height adjustment unit 8, the upper plate 80, the holding member 81, the hanger member 9, and the like. Alternatively, each configuration of the components of the tire holder apparatus may be appropriately selected without limiting to the aforementioned embodiments.

Although embodiments of this invention have been described hereinbefore, the aforementioned embodiments are just a part of applications of this invention, and are not intended to limit the technical scope of this invention to specific configurations of the aforementioned embodiments.

This application claims priority based on Japanese Patent Application No. 2013-060598 filed with Japan Patent Office on March 22, 2013, the entire content of which is incorporated herein by reference.

## Claims

1. A tire holder apparatus comprising:
a frame; and
a pair of support rollers installed in the frame to load a tire,
wherein the frame is disassemblable into upper and lower frames,
the pair of support rollers is installed in the lower frame,
the frame comprises the upper and lower frames and a connecting member that detachably connects the upper and lower frames to each other, and
the lower frame is loaded on a cart.

2. The tire holder apparatus according to claim 1, further comprising a jack interposed between the lower frame and the cart to lift or lower the lower frame.

3. The tire holder apparatus according to claim 1, wherein the lower frame comprises a plurality of strut members erected from one-side edges of both the support rollers,
the upper frame comprises a horizontal structural member stretching between the plurality of strut members,
the connecting member comprises first and second connecting members, the first connecting member is provided between an upper end of one of the strut members and one side end of the horizontal structural member, and
the second connecting member is provided between an upper end of the other strut member and the other side end of the horizontal structural member.

4. The tire holder apparatus according to claim 3, wherein each of the first and second connecting members comprises a connecting member male portion installed in the horizontal structural member and a connecting member female portion installed in the strut member,
the connecting member female portion comprises a vertical hole formed in a vertical direction and opened upwards and a horizontal hole formed in a horizontal direction, and
the connecting member male portion comprises
a guide block fixed to the horizontal structural member,
a stopper that is inserted into the guide block and has a leading end accessing the horizontal hole, and
a guide that protrudes downwards from the guide block and is inserted into the vertical hole.

5. The tire holder apparatus according to claim 4, wherein the connecting member male portion comprises a lever that causes the leading end of the stopper to advance to or retreat from the guide block,
the guide block comprises a guide groove that guides the lever,
the guide groove comprises a pair of vertical grooves extending vertically and arranged in parallel with a longitudinal direction of the guide block and a horizontal groove that links upper ends of the vertical grooves to each other, and
the lever is fixed to a lateral surface of the stopper in an upright state and extends to the outside of the guide block through the guide groove.

6. The tire holder apparatus according to claim 4, wherein the connecting member male portion comprises a spring that biases the leading end of the stopper to protrude from the guide block and a plunger that prevents the leading end of the stopper from protruding from the guide block.

7. The tire holder apparatus according to claim 4, wherein the connecting member female portion comprises:
a bracket fixed to the upper end of the strut member,
a block fixed to a lateral surface of the strut member opposite to a center side of the tire holder apparatus such that an upper end the block protrudes from the strut member, and
the vertical hole is provided in the bracket, and the horizontal hole is provided in the block.

8. The tire holder apparatus according to claim 5, wherein the connecting member male portion of the first connecting member and the connecting member male portion of the second connecting member have common structure and are arranged in a plane-symmetrical geometry with respect to a center plane of the tire holder apparatus, and
the connecting member female portion of the first connecting member and the connecting member female portion of the second connecting member have common structure and are arranged in a plane-symmetrical geometry with respect to the center plane of the tire holder apparatus.
